# EUROPEAN PATENT APPLICATION

(11) **EP 1 206 995 A2**
(43) Date of publication of application: **22.05.2002**
(21) Application number: 01301572.2
(22) Date of filing: 21.02.2001
(51) Int. Cl.: B23K 20/12

(54) **Friction stir welding method**

(30) Priority: 17.11.2000 JP 2000350412
(71) Applicant: Hitachi, Ltd., Chiyoda-ku, Tokyo 101-8010 (JP)
(72) Inventor: Ezumi, Masakuni Hitachi Ltd., Chiyoda-ku, Tokyo 100-8220 (JP); Fukuyori, Kazushige Hitachi Kasado Kikai Co.,Ltd., Kudamatsu-shi, Yamaguchi 744-0002 (JP)
(74) Representative: Paget, Hugh Charles Edward

(57) **Abstract**

When friction stir welding stacked plates 10, 20, the stacked surface of the plate 10 is provided with a groove 12. The outer side of the other plate 20 has a rib 22. A friction stir welding tool 50 is inserted from the rib 22 and rotated. The groove 12 is filled up during the friction stir welding by the metal of the rib 22. By this method, the pressure of the welding portion is not excessive, and therefore prevents the generation of a notch at the stacked surfaces. A lightweight joint having good characteristics can be obtained.

## Description

### FIELD OF THE INVENTION

The present invention relates to a method for friction stir welding stacked members.

### DESCRIPTION OF THE RELATED ART

Friction stir welding is a method for welding metal members by inserting a round shaft (here called a rotary tool) to a joint portion (parts to be joined) and moving the tool along the joint line, thereby heating, mobilizing and plasticising the joint portion in order to perform solid-phase welding of the members. The rotary tool comprises a large diameter portion and a small diameter portion. The small diameter portion is inserted into the members to be welded, and the end surface of the large diameter portion contacts the members. The small diameter portion is equipped with a screw thread.

Moreover, a convex portion or rib is formed at the side at which the rotary tool is inserted on one or both of the two members to be welded, so that the metal that forms the convex portion is mobilized to fill the gap between the two members. The large diameter portion of the rotary tool is inserted in the convex portion.

These techniques are disclosed in JP-A-11-90655 (US-A-6050474).

### SUMMARY OF THE INVENTION

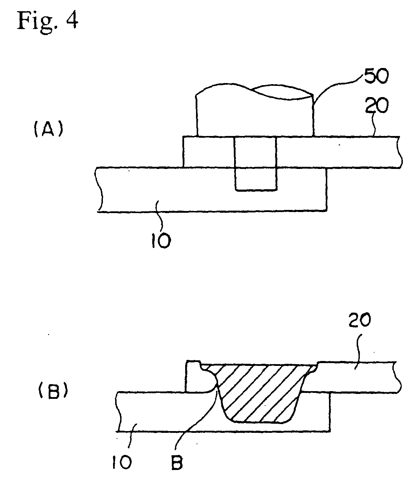

Friction stir welding can be applied for joining stacked (superposed) members. When the stacked members are welded through friction stir welding, a notch is formed on the stacked surfaces. An example is shown in FIG. 4. FIG. 4(A) is a vertical cross-sectional view during the friction stir welding process, and FIG. 4(B) is a vertical cross-sectional view showing the state after the friction stir welding. FIG. 4(B) is a simplified explanatory view. The friction stir welding is performed by inserting a rotary tool 50 to the stacked members from the upper direction. The stirred region shown by the hatching and the stacked surface of the two members has a notch B knuckled upwardly.

The object of the present invention is to provide a friction stir welding method capable of preventing the generation of notches at the stacked surfaces.

The present invention is a friction stir welding process comprising stacking a first member and a second member, providing a groove on the stacked surface of the first member along the direction of friction stir welding, and performing friction stir welding of the stacked members along the groove using a rotary tool having a small diameter portion with a diameter greater than the width of the groove. The invention also provides an extruded member having a groove, for use in the process.

### BRIEF DESCRIPTION OF THE DRAWINGS

FIG. 1 is a vertical cross-sectional view showing the joint portion according to one embodiment of the present invention;
FIG. 2 is a vertical cross-sectional view during the welding of FIG. 1;
FIG. 3 is a vertical cross-sectional view showing the state after the friction stir welding of FIG. 1; and
FIG. 4 is a vertical cross-sectional view showing the prior-art welding method.

### DETAILED DESCRIPTION OF PREFERRED EMBODIMENTS

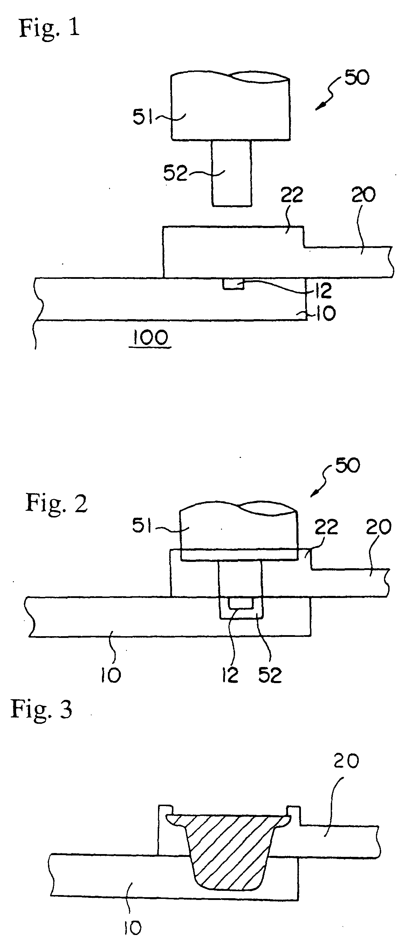

One preferred embodiment of the present invention will now be explained with reference to FIGS. 1 through 3. FIG. 3 shows a simplified view of the stirred region in hatching. A plate 20 is stacked on a plate 10. The stacked area of the plate 10 (the upper surface) is provided with a substantially square-shaped groove 12. A convex portion or rib 22 is provided at the upper surface of the plate 20. The plate 10 is mounted on a stage 100, and is fixed on the stage 100 together with the plate 20. The plates 10 and 20 are for example protruding members or large bodies. They may be parts of extruded members, e.g. of aluminum alloy.

Friction stir welding is performed by inserting a rotary tool 50 from the upper side of the upper plate 20. The rotary tool 50 includes a large diameter portion 51 and a small diameter portion 52 formed on the end of said large diameter portion. A screw thread is provided on the small diameter portion 52. The centre of the rotary tool 50 is inserted to the centre of width of the convex portion 22. The centre of the groove 12 is also located at said centre. The diameter of the large diameter portion 51 is smaller than the width of the convex portion 22. The width of the groove 12 is smaller than the diameter of the small diameter portion 52 or the large diameter portion 51.

Upon friction stir welding, the lower end of the large diameter portion 51 is positioned between the line extended from the surface of the plate 20 having the convex portion and the top of the convex portion 22. The tip of the small diameter portion 52 is inserted deeper than the bottom of the groove 12. In this state, the rotary tool 50 is rotated and moved along the line to be welded. The axis of the rotary tool 50 is tilted so that the small diameter portion 62 is more forward than the large diameter portion 51 in the direction of movement of the tool.

The existence of the space formed by the groove 12 prevents the pressure of the stirred region from being excessive, and prevents the generation of a notch B of the type shown in FIG. 4.

Moreover, the groove 12 is filled up during the stir welding. The metal material constituting the convex portion 22 is plasticised and fills the groove 12. If the convex portion 22 did not exist, the upper surface of the plate 20 is scraped and the plate becomes thin, but since the present embodiment is equipped with a convex portion 22, the scraped portion is compensated by the convex portion 22, permitting reduction of the plate thickness of the plate 20 as a whole.

The technical scope of the present invention is not limited to the terms used in the claims or in the summary of the present invention, but is extended for example to the range in which a person skilled in the art could easily substitute based on the present disclosure.

By the friction stir welding method of the present invention, a lightweight joint having good characteristics is achieved.

## Claims

1. A friction stir welding method comprising the steps of:
stacking a first member and a second member, the stacked surface of said first member having a groove formed along the direction in which the friction stir welding is to be performed; and
friction stir welding said stacked members along said groove using a rotary tool including a small diameter portion having a diameter greater than the width of said groove.

2. A friction stir welding method according to claim 1, wherein said friction stir welding is performed by inserting said small diameter portion from said second member to a depth deeper than the depth of said groove.

3. An extruded member used for friction stir welding, including a surface to be stacked by another member, said surface being the surface to be friction stir welded to said another member, having a groove extending along the direction of extrusion.
